Europäisches Patentamt

European Patent Office

Office européen des brevets

(19)

(11) Numéro de publication: **0 199 615**
**B1**

(12) **FASCICULE DE BREVET EUROPEEN**

(45) Date de publication du fascicule du brevet:
**02.11.89**

(51) Int. Cl.⁴: **A01F 15/14**

(21) Numéro de dépôt: **86400567.3**

(22) Date de dépôt: **18.03.86**

(54) **Presse à balles parallélépipédiques avec dispositif de réduction et de compensation de la tension du fil de liage.**

(30) Priorité: **03.04.85 FR 8505040**

(43) Date de publication de la demande:
**29.10.86 Bulletin 86/44**

(45) Mention de la délivrance du brevet:
**02.11.89 Bulletin 89/44**

(84) Etats contractants désignés:
**BE DE GB NL**

(56) Documents cités:
**EP-A- 0 084 680**
**DE-A- 3 036 562**
**DE-C- 238 049**
**FR-A- 2 391 636**
**GB-A- 2 046 313**
**US-A- 4 196 661**

(73) Titulaire: **RIVIERRE CASALIS, 55 Avenue Ampère,
F-45800 St Jean de Braye(FR)**

(72) Inventeur: **Fortin, Gilbert, 2954 Ancienne Route de
Chartres, F-45400 Saran(FR)**
Inventeur: **Pin, Serge, 7, rue de Greven,
F-45200 Montargis(FR)**

(74) Mandataire: **Hirsch, Marc-Roger, Cabinet Hirsch 34 rue
de Bassano, F-75008 Paris(FR)**

## Description

La présente invention concerne un dispositif de liage pour une presse à balles parallélépipédiques, constitué d'un noueur disposé au-dessus d'un canal de pressage des balles, d'une aiguille destinée à présenter le brin inférieur d'un fil de liage au noueur, d'un bras horizontal qui est suspendu devant le noueur à un levier articulé pour venir en appui sur le brin supérieur du fil de liage et entraîner ce brin à une distance en amont du noueur pour mettre en réserve sous forme d'une boucle ouverte une portion de fil, et de moyens d'entraînement de ce levier, synchronisés avec le mouvement du noueur pour rapprocher le bras horizontal du noueur au cours de la confection du nœud de liage par pivotement du levier articulé.

Une presse de ce genre est décrite dans FR-A 2 542 969. Par ailleurs, FR-A 2 362 577 décrit une presse à balles de fourrage dans laquelle on évite la traction du fil à l'interface de deux balles consécutives, en confectionnant une boucle de réserve placée à l'extérieur du canal de pressage, et qui se résorbe au fur et à mesure de l'accroissement du volume de la balle en cours de formation. Le dispositif de compensation de la tension du fil correspondant nécessite une mise au point soigneuse et un ensemble d'organes travaillant en synchronisme avec celui des aiguilles.

FR-A 2 542 968 décrit une presse dans laquelle un vérin écarte temporairement de la balle l'ensemble des spires de fil respectivement maintenues au moyen de crochets libérables sous l'action d'un autre vérin après la confection des nœuds au contact des noueurs. Le dispositif précité évite la rupture du fil sous l'effet des tensions internes libérées dans la balle après son extraction du canal de pressage.

Le dispositif de liage selon l'invention s'applique à une presse à balles avec dispositif de réduction et de compensation de la tension du fil de liage dont une extrémité est maintenue par un organe de retenue constituée par un mécanisme additionnel qui emmagasine une portion de fil lors de la formation de la balle, qui est relâchée au cours de la confection du nœud, puis retendue pour l'extraction du nœud.

Devant chaque noueur, un bras suspendu à un levier articulé coopère avec une came de commande à mouvement synchrone de celui du noueur et les fils respectivement tendus par ledit bras constituent un ensembles de boucles ouvertes longitudinalement décalées par rapport aux noueurs en direction de la partie postérieure du canal de pressage au cours de la confection de la balle et avoisinant lesdits noueurs, par suite d'une rotation des cames en synchronisme avec le mouvement des noueurs. Ainsi la confection des boucles de fil que l'on résorbe au cours de l'opération de nouage, évite une tension et l'élongation du fil dans la balle nouée.

FR-A 2 391 636 décrit une machine pour lier des bottes de fourrage et comportant un dispositif pour tendre la ficelle de liage, muni à son extrémité de deux galets espacés. Le dispositif peut pivoter vers le haut pour donner au brin de fil de liage le mou nécessaire correspondant au mouvement d'une aiguille de liage.

Le dispositif de réduction et de compensation de la tension du fil de liage adjoint à une presse existante, comporte un ensemble de bras mobiles de renvoi de l'ensemble des fils respectivement fixés à un ensemble de leviers articulés à mouvement synchrone asservi à celui des noueurs, entre une première position décalée vers la partie postérieure du canal de pressage et une deuxième position plus rapprochée des noueurs dans laquelle une boucle de réserve est chargée par le noueur au cours de la confection du nœud.

Or, la présente invention a pour but notamment de perfectionner les moyens de nouage des fils de liage dans une presse du type de celle décrite dans la publication FR-A 2 542 969 mentionnée ci-dessus.

Selon l'invention, le bras horizontal comporte un doigt orienté en direction du canal de pressage, situé en dessous dudit bras, décalé transversalement vis-à-vis du noueur en regardant la direction longitudinale du canal et qui guide ledit brin supérieur, et sur lequel s'appuie ledit brin supérieur, modifiant de ce fait l'orientation de ce brin supérieur au cours de la confection dudit nœud et retendant les deux brins du fil de liage après la confection du nœud, lorsque lesdits moyens d'entraînement déplacent ledit levier de manière à éloigner ledit bras et ledit doigt du noueur.

D'autres caractéristiques et avantages de l'invention apparaîtront à la lecture de la description faite en référence au dessin annexé dans lequel:

– la figure 1 est une représentation schématique de la presse équipée d'un système de nouage

– la figure 2 représente schématiquement l'état du dispositif noueur au cours de la confection d'une balle

– les figures 3 à 5 représentent schématiquement les états successifs du dispositif noueur au cours de la confection du nœud

– la figure 6 est une vue de dessus du dispositif noueur au cours de la confection du nœud

– la figure 7 est une représentation schématique d'un noueur.

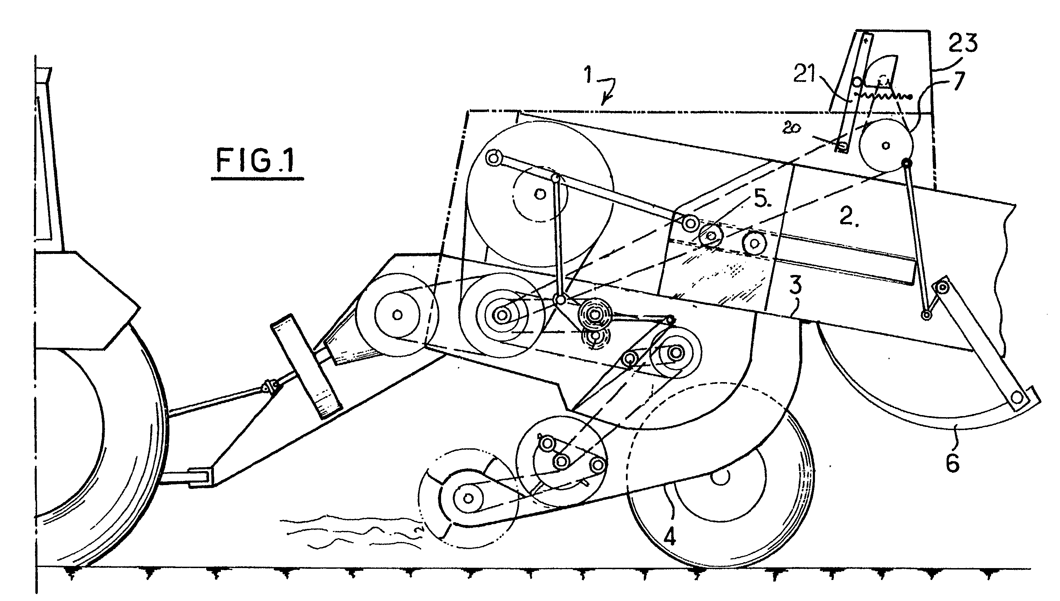

La presse à balles parallélépipédiques qui est connue en soi, notamment de FR-A 2 542 969, est représentée schématiquement à la figure 1. On rappelera donc simplement les constituants de la presse qui sont nécessaires à la compréhension de la présente invention.

La presse est constituée essentiellement par un châssis 1 qui comporte intérieurement un canal de pressage 2 dans lequel débouche par un orifice d'admission 3 une conduite de chargement 4. Dans le canal de pressage 2 se déplace un piston presseur 5 qui se meut d'un mouvement alternatif.

La presse comporte par ailleurs un mécanisme de liage représenté schématiquement par un ensemble d'aiguilles 6 dont le mouvement est synchronisé avec celui des noueurs 7 disposés transversalement au dessus du canal de pressage 2 et qui reçoivent le fil de liage 8.

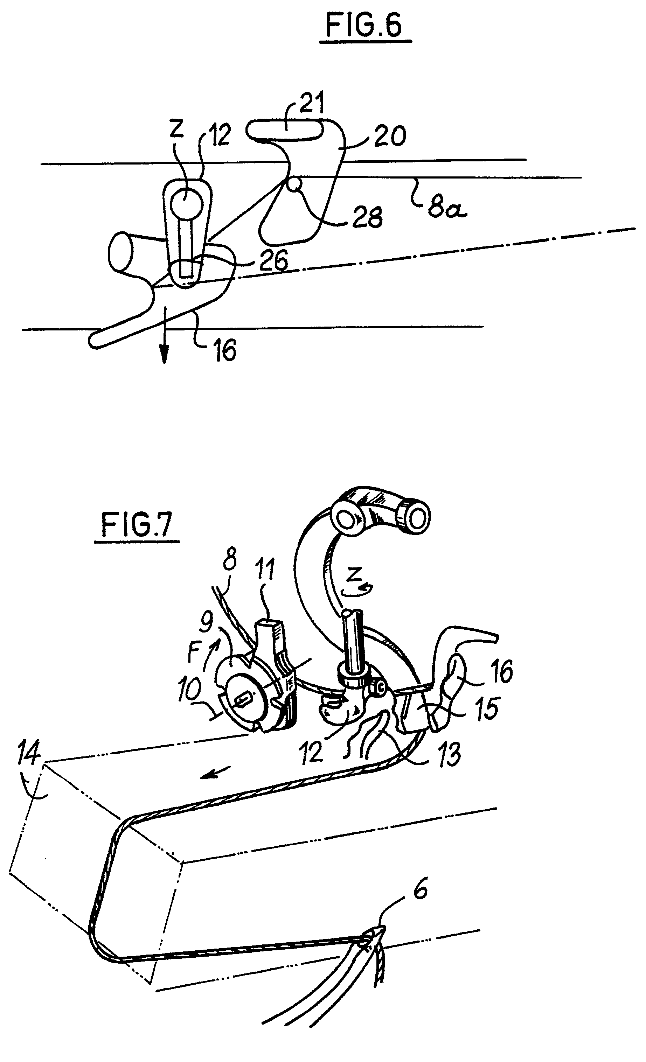

A titre d'exemple on retiendra (figure 7) une forme connue de noueurs dans lequel l'extrémité libre du fil 8 est serrée entre un reteneur 9 à encoches, monté rotatif sur un arbre 10 et une pince à ressort 11. A partir du reteneur 9 le fil 8 passe sur un bec de nouage 12 et un guide puis forme une boucle ouverte autour de trois faces de la balle 14 jusqu'à l'aiguille correspondante 6. Lorsque la balle 14 est achevée les aiguilles 6 sont actionnées et traversent le canal de pressage 2 et chacune d'elles présente le deuxième brin de la boucle au-dessus du bec 12 et le place dans l'encoche du reteneur 9 qui se déplace dans le sens de la flèche F afin de maintenir les extrémités de la boucle au-dessus du bec 12. Le bec 12 tourne alors dans le sens de la flèche Z entraîné par une liaison cinématique avec l'arbre 10 et s'ouvre sous l'action d'une came 13 puis se referme sous l'action de ladite came. Finalement les deux brins sont sectionnés par un couteau 15 et le nœud peut être éjecté du bec sous l'effet d'un éjecteur 16 porté par le couteau 15.

Un bras horizontal 20 est suspendu à un levier 21 monté à rotation autour d'un axe fixe 22 solidaire d'une console 23 montée au-dessus du canal de pressage 2. Le levier 21 porte un galet 24 en appui sur une came de commande 25.

La came 25 est montée solidaire d'un axe 26 entraîné en rotation par une chaîne à partir de l'arbre de commande des noueurs dans le but de réaliser une transmission de mouvement synchronisée avec celui desdits noueurs 7. Un ressort 27 rappelle le levier 21 sur la came 25. Le bras 20 porte par ailleurs un doigt 28 qui est disposé sous ce dernier en position décalée transversalement (Fig. 6) par rapport au noueur 7, en regardant selon la direction longitudinale du canal 2; ce doigt (28) s'étend en direction du canal de pressage 2, assure la tension du fil et modifie l'orientation du brin supérieur de la boucle au cours de la confection du nœud.

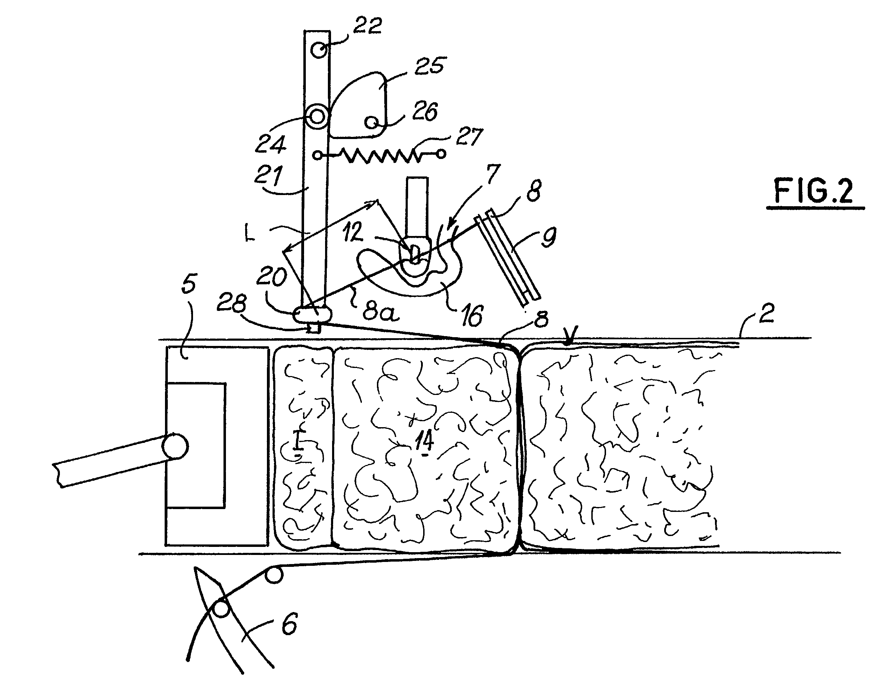

Le fonctionnement du dispositif de réduction et de compensation de la tension du fil 8 est décrit ci-après en référence aux figures 2 à 7.

Selon la figure 2 le bras 20 en position de repos est placé devant le bec 12 complété par un éjecteur 16 porté par le couteau 15. Sur le bras 20 repose le brin supérieur 8a de la boucle de fil 8 pincée par le reteneur 9. Durant la formation de la balle 14 par accumulation de charges élémentaires de fourrage 1, le levier 21 est immobile et maintient en réserve une portion de fil définie par la distance L entre le bras 20 et l'éjecteur 16. Au cours de la formation de la balle 14 la tension du brin 8a augmente.

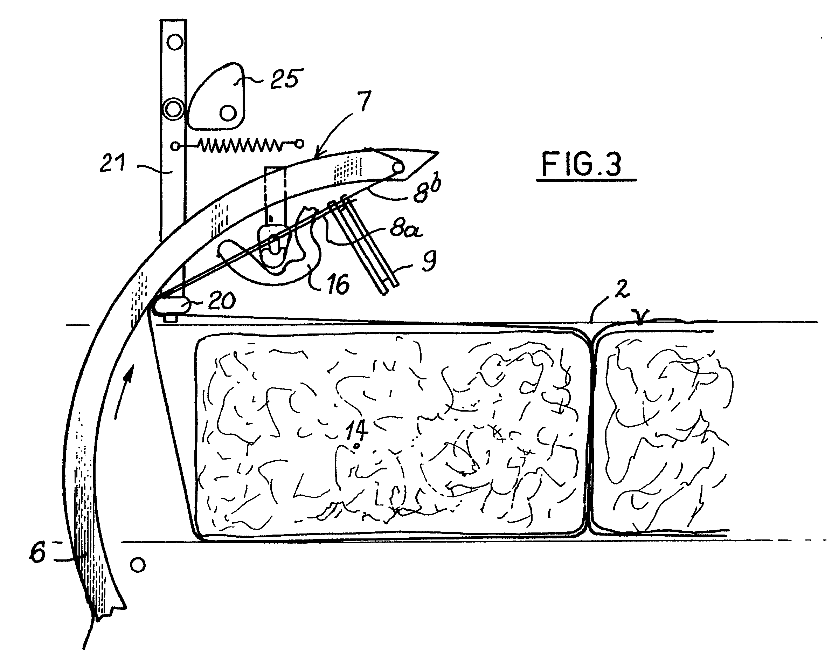

La figure 3 montre la balle 14 achevée et comprimée par le piston 5. Le processus de liage étant déclenché, les aiguilles 6 amènent le brin inférieur 8b du fil devant le noueur correspondant 7.

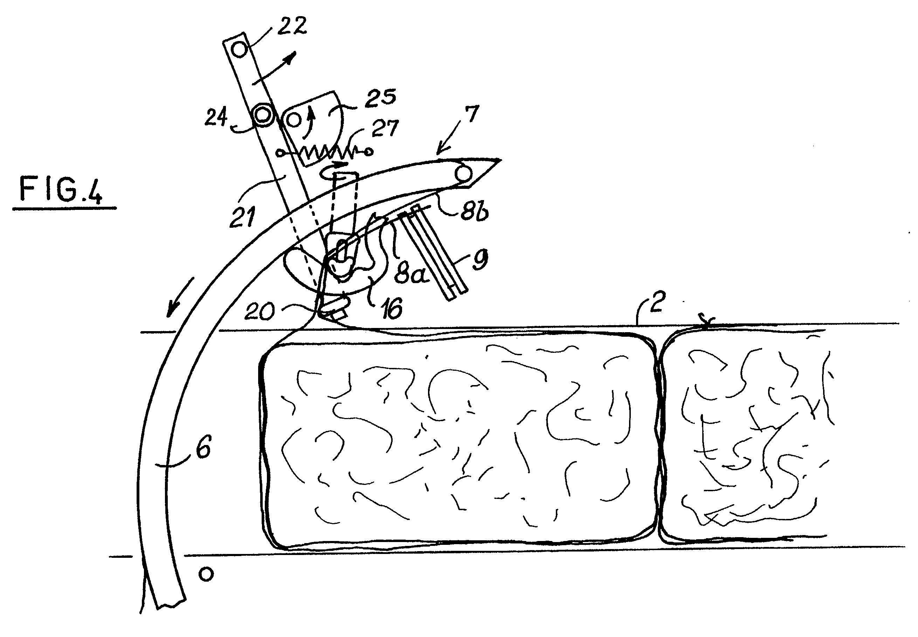

La figure 4 montre le mouvement de la came 25 et le déplacement résultant du levier 21 sous l'action du ressort de rappel 27. Le levier 21 entraîne le bras correspondant 20 depuis la position de repos devant le bec 12 et l'éjecteur 16 à la position arrière devant le reteneur 9.

La réserve de fil sensiblement de longueur 2 L mise en réserve selon la figure 2 est restituée sur le brin supérieur 8a qui se détend. Le reteneur 9 est soumis à un effort de traction très atténué et le bec 12 mis en rotation autour de l'axe Z fabrique le nœud

26 avec l'ensemble des brins 8a, 8b. Le nœud 26 est alors éjecté latéralement sous l'effet de l'éjecteur 16.

Il y a lieu de noter que l'éjection du nœud 26 est d'autant meilleure que les brins 8a, 8b sont retendus après la confection du nœud. La tension nécessaire est réalisée par le doigt 28 placé sous le bras 20 décalé latéralement.

Le fonctionnement de l'éjecteur 16 est facilité par suite de la modification de l'orientation du brin supérieur 8a sous l'effet du doigt de renvoi 28 ainsi que cela est montré à la figure 6.

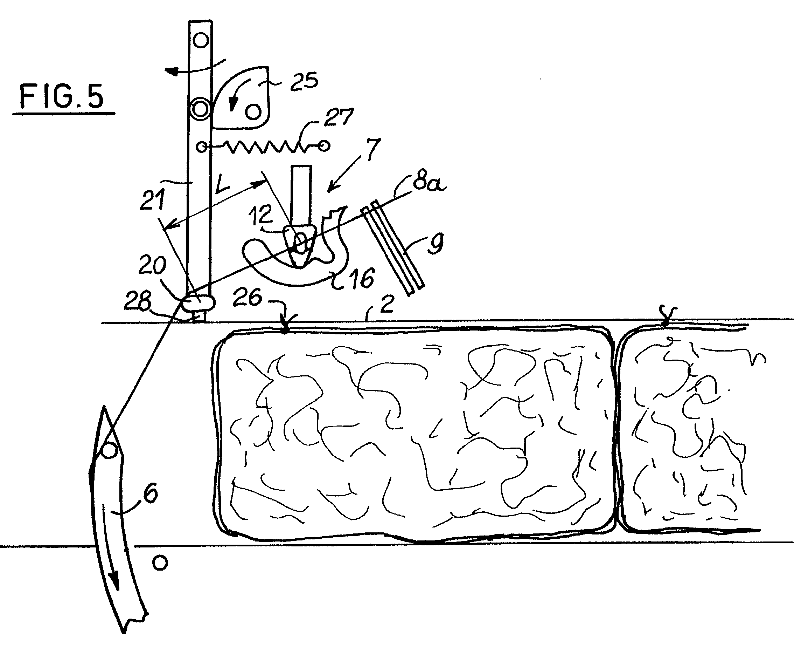

La figure 5 montre l'état du dispositif après l'éjection du nœud 26. L'aiguille revient simultanément à sa position de repos représentée à la figure 2 et le levier 21 déplacé par la came 25 reprend sa position initiale représentée à la figure 2 avec une réserve de fil égale à L en vue de cycle de liage suivant.

Il y a lieu de noter qu'il sera possible d'ajuster la distance L entre le bras 20 et le bec 12 en fonction de la tension exercée sur le brin 8a.

**Revendications**

Dispositif de liage pour une presse à balles parallélépipédiques, constitué d'un noueur (7) disposé au-dessus d'un canal (2) de pressage des balles, d'une aiguille (6) destinée à présenter le brin inférieur (8b) d'un fil de liage (8) au noueur (7), d'un bras horizontal (20) qui est suspendu devant le noueur à un levier articulé (21), pour venir en appui sur le brin supérieur (8a) du fil du liage et entraîner ce brin à une distance (L) en amont de noueur (7) pour mettre en réserve, sous forme de boucle ouverte, une portion de fil, et de moyens d'entraînement de ce levier, synchronisés avec le mouvement du noueur pour rapprocher le bras horizontal du noueur (7) au cours de la confection du nœud de liage (26), par pivotement du levier articulé (21), caractérisé en ce que le bras horizontal (20) comporte un doigt (28) orienté en direction du canal de pressage (2), situé en dessous dudit bras, décalé transversalement vis-à-vis du noueur (7) en regardant selon la direction longitudinale du canal (2) et qui guide ledit brin supérieur (8a) (figure 6), modifiant de ce fait l'orientation de ce brin supérieur au cours de la confection dudit nœud (26) et retendant les deux brins (8a, 8b) du fil de liage (8) après la confection du nœud, lorsque lesdits moyens d'entraînement déplacent ledit levier (21) de manière à éloigner ledit bras (20) et ledit doigt (28) du noueur (7).

**Patentansprüche**

Bindevorrichtung für eine Ballenpresse zum Binden parallelepipedischer Ballen bestehend aus einer oberhalb eines Ballenpreßkanals (2) angeordneten Knotvorrichtung (7), einer Nadel (6) zum Heranbringen des unteren Trums (8b) eines Ballenbindefadens (8) an die Knotvorrichtung (7), einen vor der Knotvorrichtung (7) an einem Gelenkhebel (21) aufgehängten waagerechten Arm (20), der sich auf das obere Trum (8a) des Ballenbindefadens auflegt und dasselbe bis zu einem Abstand (L) vor der Knotvorrichtung (7) mitnimmt, um einen Fadenabschnitt in Form einer offenen Schlinge bereitzustellen, sowie Mittel zum Antrieb des Hebels, die mit den Bewegungen der Knotvorrichtung synchronisiert sind, um während der Herstellung des Bindeknotens (26) durch Verschwenken des Gelenkhebels (21) den waagerechten Arm (20) der Knotvorrichtung (7) zu nähern, dadurch gekennzeichnet, dass der waagerechte Arm (20) einen sich in Richtung des Presskanals (2) erstreckenden Finger (28) aufweist, der unterhalb des Armes (20), in Längsrichtung des Kanals (2) betrachtet, in bezug auf die Knotvorrichtung (7) seitlich versetzt angeordnet ist und das obere Fadentrum (8a) (Fig. 6) führt, derart, dass er während der Herstellung des Knotens (26) die Richtung des oberen Fadentrums ändert und beide Trume (8a, 8b) des Ballenbindefadens (8) nach der Herstellung des Knotens wieder spannt, wenn die Antriebsmittel den Hebel (21) derart bewegen, dass der Arm (20) und der Finger (28) sich von der Knotvorrichtung (7) entfernen.

**Claims**

Binding device for a parallelepipedic baler, constituted by a knotting mechanism (7) disposed above a baling channel (2), a needle (5) intended to present the lower strand (8b) of a binding twine to the knotting device (7), a horizontal arm (20) that is suspended in front of the knotting device with a hinged lever (21), for abuting on the upper strand (8a) of the binding twine and carrying along this twine at a distance (L) upstream from the knotting device (7) to put in reserve, in the form of an open loop, a section of the twine, and means for driving this lever, synchronized with the movement of the knotting device in order to move the horizontal arm closer the knotting device (7) during production of the binding knot (26), through pivoting of the hinged lever (21) characterized in that the horizontal arm (20) comprises a finger (28) mounted in the direction of the pressing channel (2), located below said arm, shifted transversally with respect to the knotting device (7) along the longitudinal direction of the channel (2) and which the said upper strand (8a) (figure 6), modifying thus the orientation of this upper strand during production of said knot (26) and restretching said strands (8a, 8b) of the binding twine (8) after production of the knot, when said driving means displace said lever (21) in such a way as to remove said arm (20) and said finger (28) from the knotting device (7).

FIG.1

EP 0 199 615 B1

FIG.2

EP 0 199 615 B1

FIG.3

FIG.4

EP 0 199 615 B1

FIG.5

# FIG.6

# FIG.7